# EUROPEAN PATENT APPLICATION

(11) **EP 2 743 872 A1**
(43) Date of publication of application: **18.06.2014**
(21) Application number: 13195396.0
(22) Date of filing: 03.12.2013
(51) Int. Cl.: G06Q 10/10, G06Q 30/02

(54) **Method and Apparatus for Formatting an Optical Machine Readable Object for Display at Point of Use or Sale**

(30) Priority: 04.12.2012 US 201213693630
(71) Applicant: Nokia Corporation, 02610 Espoo (FI)
(72) Inventor: Halme, Jaakko, 00130 Helsinki (FI); Humbach, Richard, 02780 Espoo (FI)
(74) Representative: Nokia Corporation

(57) **Abstract**

In accordance with an example embodiment of the present invention, an apparatus includes at least one processor and at least one memory including computer program code and an electronic document having an optical machine readable object. The at least one memory and the computer program code are configured to, with the at least one processor, cause the apparatus to perform at least the following: detect a triggering event; and automatically format the object of the electronic document for reading by an external device in response to the triggering event.

## Description

### TECHNICAL FIELD

The present application relates generally to displaying a machine readable object at a point of use or sale.

### BACKGROUND

It is becoming more common for consumers to use their mobile devices to carry electronic tickets, coupons, loyalty cards and other electronic documents. These documents are often PDF files (or other graphical format) and contain textual information, pictures, and an optical barcode.

Consumers typically obtain such electronic documents by, for example, email attachment, by downloading a document from a web site, or by using a specific application. Instead of printing out the document, many users choose to carry the ticket on a mobile device. When a document such as a coupon is used, for example, the user retrieves the document, displays the document, and presents the coupon displayed on the device to a clerk or an automated reader. Generally, a portion of the displayed document is scanned using the automated reader.

### SUMMARY

Various aspects of examples of the invention are set out in the claims.

According to a first aspect of the present invention, an apparatus includes at least one processor and at least one memory including computer program code. The at least one memory and the computer program code are configured to, with the at least one processor, cause the apparatus to perform at least the following: store an electronic document having an optical machine readable object; detect a triggering event; and automatically format the object of the electronic document for reading by an external device in response to the triggering event.

According to a second aspect of the present invention, a method involves selecting an electronic document bearing an optical machine readable object stored on a mobile electronic device. The method also involves detecting a triggering event, and automatically formatting the object for reading by an external device in response to the triggering event.

According to a third aspect of the present invention, a computer program product comprises a computer-readable storage medium including computer-executable instructions for executing a computer process comprising selecting an electronic document bearing an optical machine readable object stored on a mobile electronic device, detecting a triggering event, and automatically formatting the object for reading by an external device in response to the triggering event.

According to a fourth aspect of the present invention, an apparatus includes means for selecting an electronic document bearing an optical machine readable object stored on a mobile electronic device. The apparatus also includes means for detecting a triggering event, and means for automatically formatting the object for reading by an external device in response to the triggering event.

### BRIEF DESCRIPTION OF THE DRAWINGS

For a more complete understanding of example embodiments of the present invention, reference is now made to the following descriptions taken in connection with the accompanying drawings in which:
FIGURE 1 illustrates a representative mobile electronic device configured to format an optical machine readable object at point of use or sale in accordance with example embodiments of the present invention;
FIGURE 2 illustrates various components of a representative mobile electronic device configured to automatically format an optical machine readable object at point of use or sale in accordance with example embodiments of the present invention;
FIGURES 3-5 are flow diagrams showing various operations for automatically formatting an optical machine readable object at point of use or sale in accordance with example embodiments of the present invention;
FIGURE 6 illustrates a representative electronic document bearing an optical machine readable object whose format attributes are automatically adjusted by a mobile electronic device implemented in accordance with example embodiments of the present invention;
FIGURE 7 (which includes FIGURES 7A and 7B) illustrates an automatic formatting process performed on an electronic document bearing an optical machine readable object by a mobile electronic device implemented in accordance with example embodiments of the present invention;
FIGURE 8 (which includes FIGURES 8A, 8B and 8C) illustrates a representative triggering event which initiates automatic adjustment of object format attributes to facilitate reading of the object by an external device, such as an optical scanner, in accordance with example embodiments of the present invention; and
FIGURE 9 (which includes FIGURES 9A, 9B and 9C) illustrates another representative triggering event which initiates automatic adjustment of object format attributes to facilitate reading of the object by an external device, such as an optical scanner, in accordance with example embodiments of the present invention.

### DETAILED DESCRIPTION OF THE DRAWINGS

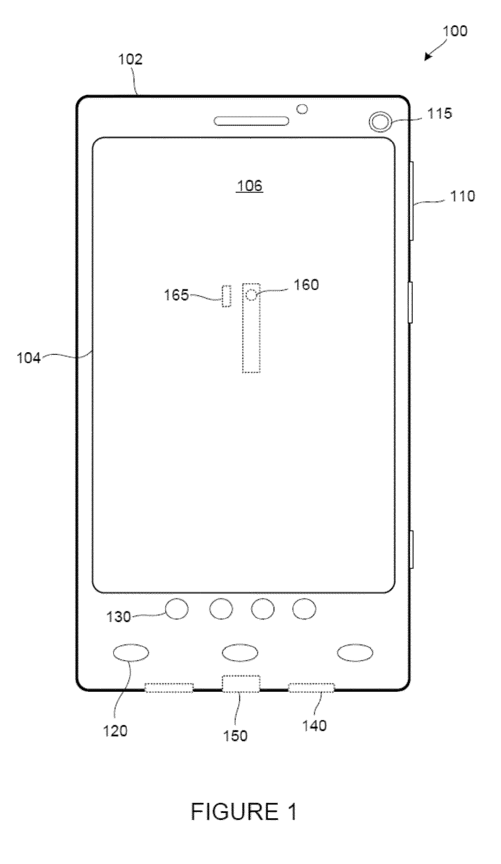

Example embodiments of the present invention and their potential advantages are understood by referring to FIGURES 1 through 9 of the drawings.

FIGURE 1 illustrates a representative mobile electronic device 100 configured to format an optical machine readable object at point of use or sale in accordance with example embodiments of the present invention. The mobile electronic device 100 includes a hand-held housing 102 within which various components are housed or supported. A display 104 is provided on an upper surface of the mobile electronic device 100. In some configurations, the display 104 is implemented as a display device, such as a liquid crystal display. In other embodiments, the display 104 is implemented as a touch screen, which facilitates tactile interaction with software, applications and other functions supported by the mobile electronic device 100. It is understood that automatic formatting of an optical machine readable object, such as a barcode, can be implemented in accordance with example embodiments of the present invention using touch screen displays and non-touch screen displays.

According to various example embodiments, the upper surface of the mobile electronic device 100 includes a number of soft key buttons 130 and hard key buttons 120 for invoking specified functions or sets of functions. One or more manually actuatable switches 110 are provided along one or more sides of the housing 102 which allow user control of specified functions, such as changing the volume of speakers 140 and turning on and off device power. The housing 102 incorporates an input/output interface connector 150, such as a USB connector. In some embodiments, the mobile electronic device 100 incorporates a first camera 160 (shown in phantom) provided on a lower surface of the housing 102. A flash assembly 165 is provided on the lower surface of the housing 102 proximate the first camera 160. A second camera 115 is optionally provided on the upper surface of the housing 102. According to some embodiments, the mobile electronic device 100 includes one or more radios, such as a cellular radio, a Wi-Fi radio, and a Bluetooth radio.

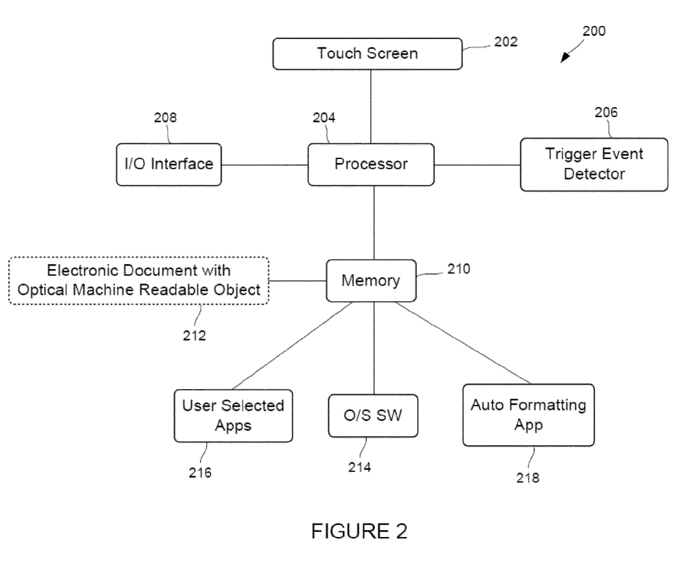

In accordance with example embodiments of the present invention, an apparatus includes means for selecting an electronic document bearing an optical machine readable object stored on a mobile electronic device. The apparatus also includes means for detecting a triggering event, and means for automatically formatting the object for reading by an external device in response to the triggering event. These and other example embodiments can be implemented using components of a mobile electronic device, such as those illustrated in FIGURES 1 and 2.

FIGURE 2 illustrates various components of a mobile electronic device 200 in accordance with various example embodiments. The mobile electronic device 200 shown in FIGURE 2 includes a processor 204 coupled to a touch screen 202, a memory 210, and an I/O interface 208. The processor 204 can be implemented as a single-core, dual-core or multiple-core processor. The processor 204 includes or is coupled to a trigger event detector 206. The trigger event detector 206 is configured to detect one or a variety of events which are determined by the processor 204 to constitute triggering events. A triggering event can take various forms, such as a predefined event initiated by the user (e.g., tactile input and/or verbal input), by an external device, or a combination thereof. For example, detecting a predefined motion gesture involving the mobile electronic device 200 can constitute detection of a triggering event.

According to example embodiments, a motion gesture is a user generated motion or force involving the mobile electronic device 200. A non-exhaustive, non-limiting list of motion gestures include the following: rotating the mobile electronic device 200 along 1 (e.g., x), 2 (e.g., y), or 3 (e.g., z) axes; flipping or double-flipping the mobile electronic device 200; changing an orientation of the mobile electronic device 200 from a use orientation to an orientation appropriate for reading a displayed object by an optical scanner; shaking the mobile electronic device 200; tapping, double-tapping, or applying a pre-recorded tap sequence (e.g., by using 1, 2, 3, or 4 fingers) to a touch screen of the mobile electronic device 200; and swiping the touch screen of the mobile electronic device 200 (e.g., by using 1, 2, 3, or 4 fingers), for example. In some embodiments, the user has the capability to create and store the motion gesture or other user input that defines the event which triggers an automatic formatting procedure. In other embodiments, the user has the capability to select from a number of previously created (i.e. factory created) motion gestures or other user inputs that define the event which triggers an automatic formatting procedure. According to further embodiments, a specific predefined motion gesture or other user input is created by the factory that defines the event which triggers an automatic formatting procedure.

The memory 210 is configured to store a wide variety of information, including operating system software 214, various user selected applications 216, and an automatic formatting application 218 implemented in accordance with example embodiments of the present invention. The memory 210 is further configured to store an electronic document bearing at least one optical machine readable object 212, such as a barcode. For example, the electronic document 212 can take the form of a coupon, ticket or card which bears a barcode. The electronic document 212 may, for example, be received from a website via the I/O interface 208 and stored in the memory 210, allowing the electronic document 212 to be carried by the user for later use at a point of use or sale. When needed, the user can select and retrieve the electronic document 212, typically via interaction with the touch screen 202, causing the electronic document 212 to be transferred from memory 210 to the touch screen 202 via the processor 204. In response to a triggering event detected by the trigger event detector 206, the barcode of the electronic document 212 is subject to automatic formatting by execution of the automatic formatting application 218 by the processor 204.

It is to be understood that the mobile electronic devices 100 and 200 shown in FIGURES 1 and 2 are intended to represent a wide variety of electronic devices that are capable of formatting an optical machine readable object, such as a barcode or other machine-readable graphic, in accordance with example embodiments of the present invention. For example, the mobile electronic device 100 can be implemented as a mobile cellular telephone, a tablet, a PC or other type of PDA (personal digital assistant) device.

As discussed previously, it is becoming more common for consumers to use their mobile devices to carry electronic tickets, coupons, loyalty cards and other electronic documents, which obviates the need to print and carry a physical version of such documents. When at a point of use or sale which includes a barcode scanner, for example, an electronic document bearing a barcode is typically selected by the user for presentation on the display of a mobile electronic device. In order for the barcode to be properly read by the barcode scanner, the user must manually manipulate the position and size of electronic document so that the barcode can be read by the barcode scanner. For example, a user often needs to manually center and resize the barcode so that the entire barcode is displayed in the right size for optical reading. The process of manually manipulating barcode position and size is typically slow and often causes a delay in the barcode reading process. In the case of electronic airline boarding passes, for example, the delays in the barcode reading process during boarding of an airplane can result in long passenger lines and appreciable delays in departure. It can be appreciated that, in other contexts, such barcode reading delays can cause lines especially when barcodes are used as tickets for concerts, movies, and other public events.

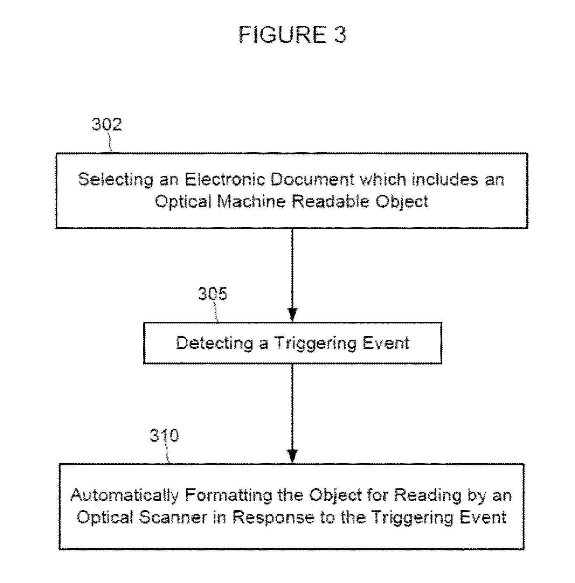

FIGURE 3 is a flow diagram showing various operations for automatically formatting an optical machine readable object provided on an electronic document at point of use or sale in accordance with example embodiments of the present invention. Automatic formatting of an optical machine readable object according to the embodiment shown in FIGURE 3 involves selecting 302 an electronic document stored on a mobile electronic device, wherein the electronic document includes an optical machine readable object. The methodology shown in FIGURE 3 also involves detecting 305 a triggering event, and automatically formatting 310 the object in a format suitable for reading by an external device, such as an optical scanner. Automatically formatting 310 the object typically involves resizing, centering, or both resizing and centering the object so that the entire object is made visible on a mobile electronic device's display and in a format readable by an optical scanner. Automatically formatting 310 the object may involve scaling the object, such as by applying an interpolation algorithm to enhance the resolution of the object, for example.

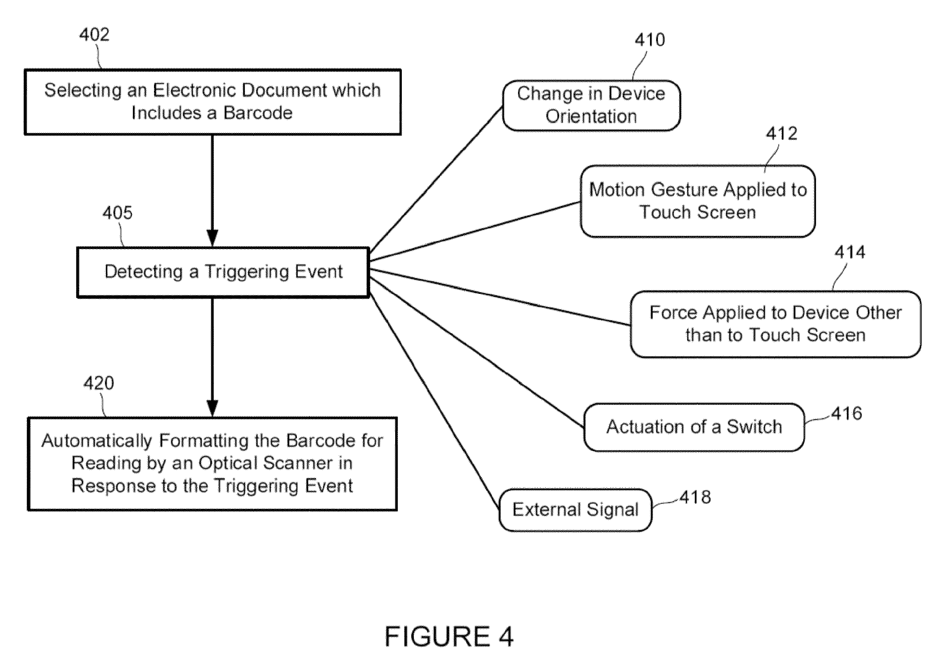

FIGURE 4 is a flow diagram showing various operations for automatically formatting an optical machine readable object at point of use or sale in accordance with example embodiments of the present invention. In this illustrative embodiment, the optical machine readable object is described as a barcode. Automatic adjustment of barcode format attributes according to the example embodiment shown in FIGURE 4 involves selecting 402 an electronic document bearing a barcode stored on a mobile electronic device. The methodology shown in FIGURE 4 also involves detecting 405 a triggering event, and automatically formatting 420 the barcode so that the barcode is presented in a format suitable for reading by an optical scanner.

As discussed previously, a triggering event can take various forms. According to some embodiments, a change 410 in the orientation of the mobile electronic device is detected as a triggering event. In other embodiments, a motion gesture 412 involving the touch screen or other portion of the mobile electronic device constitutes a triggering event. In further embodiments, a force applied 414 to the mobile electronic device at a location other than to the touch screen, such as shaking, rotating or other force resulting from manipulation of the mobile electronic device by the user, is detected as a triggering event. Triggering an automatic formatting process in response to a force or motion gesture not involving the touch screen is useful in preventing an accidental touch to the touch screen that would undesirably move the barcode and require manual repositioning of the barcode by the user. In yet other embodiments, a triggering event results from user actuation 416 of a switch (or a hard key or soft key) provided on the housing or touch screen of the mobile electronic device.

In some embodiments, an external signal 418 communicated between the mobile electronic device and an external device constitutes a triggering event. For example, a signal generated or received by a barcode scanner or a mobile electronic device in close proximity to the barcode scanner can be interpreted as a triggering event. By way of further example, a proximity detector of the mobile electronic device or the barcode scanner (or both) detects contact or close proximity therebewteen as a triggering event. Suitable proximity detectors include, for example: an ambient light sensor of the mobile electronic device and/or the optical scanner; a capacitive sensor of the mobile electronic device (e.g., touch screen) and/or the optical scanner; Bluetooth proximity detection circuitry; and Near Field Communication (NFC). It is understood that NFC establishes radio communication between two or more devices in response to contact between the devices or bringing the devices into close proximity, typically no more than a few centimeters. In accordance with another embodiment, wireless sensor network tags, such as those used in an AWARENET implementation or other server-based solutions, generate low-power radio messages which can be sensed and used for proximity detection. It is understood that the triggering events depicted in FIGURE 4 represent a non-exhaustive, non-limiting listing of events that can be interpreted by the mobile electronic device and/or an optical scanner as a triggering event in the context of various embodiments of the present invention.

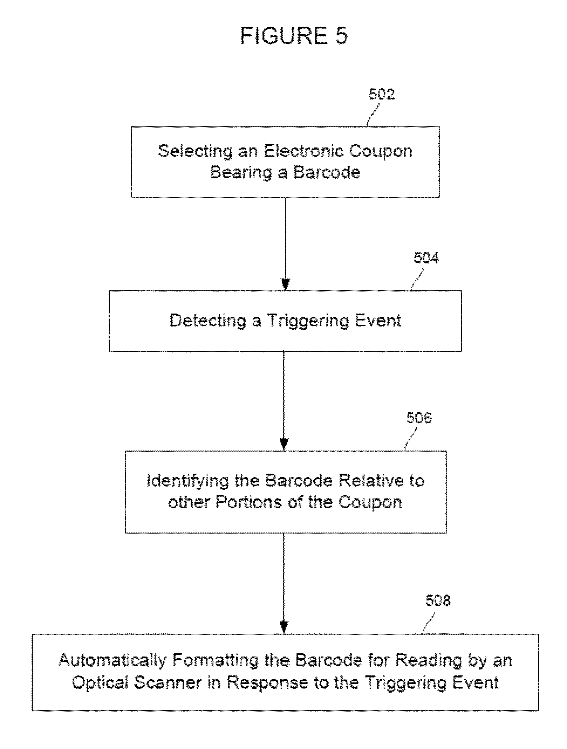

FIGURE 5 is a flow diagram showing various operations for automatically adjusting format attributes of an optical machine readable barcode at point of use or sale in accordance with example embodiments of the present invention. In accordance with the embodiment shown in FIGURE 5, it is assumed that a user of a mobile electronic device selects an electronic coupon bearing a barcode which is stored in a memory of the device. Because the electronic coupon is stored in an arbitrary format, the barcode is not properly positioned and sized on the device's display for reading by an optical scanner when retrieved from the device's memory. As a consequence, the barcode may only be partially viewable 502 within the display or not viewable at all. This often results from displaying an electronic document (e.g., coupon) which, when presented in its native format, is larger than the display of the mobile electronic device. In some cases, the barcode of an electronic document may be fully viewable when presented in its native format on the device's display, yet be unreadable due to non-compliance with minimum size and/or positioning requirements of the optical scanner. Consequently, the barcode is not properly displayable for reading by the optical scanner.

According to the embodiment shown in FIGURE 5, automatic adjustment of barcode format attributes involves detecting 504 a triggering event comprising a motion gesture or other user input. The user input may, for example, be a single user tap or a sequence of user taps applied to the touch screen of the mobile electronic device. The methodology further includes identifying 506 the entirety of the barcode relative to other portions of the coupon.

Identifying the barcode relative to other portions of the coupon is implemented using a variety of techniques. For example, the barcode of the coupon can be identified after the barcode image is transferred out of memory and into the display buffer. The barcode image is identified using various image recognition techniques, such as pattern recognition and feature extraction. Depending on a particular graphics architecture implementation, barcode recognition can involve identifying the barcode from buffers in the graphics pipeline, calculating resizing and centering requirements based on display dimensions and/or optical scanner requirements, and sending a command to the automatic formatting application to change the viewport. According to another approach, applications or user interface components used to display graphical images can be modified appropriately to support a motion gesture or other user input that constitutes a triggering event for initiating an automatic barcode formatting process according to example embodiments of the present invention.

According to one approach, an image template is created for each of a number of known barcodes, and these barcode templates are stored in the memory of the mobile electronic device or in the cloud. Each of the barcode templates includes metadata which defines the proper format attributes (e.g., dimensions of the particular barcode and possibly resolution) that enable reading of the barcodes by an optical scanner. In response to a triggering event, the processor of the mobile electronic device compares the barcode of a coupon to the stored barcodes templates (or known barcodes stored in the cloud) until a match is found. The metadata associated with the matched barcode template is read by the processor and used to resize and/or center the barcode within the display (e.g., touch screen). It is noted that a variety of barcodes have been adopted by various industries, including I-D barcodes (linear barcodes, such as UPC barcodes), 2-D barcodes (matrix barcodes, such as QR barcodes), and 3-D barcodes (DPM barcodes with height dimension).

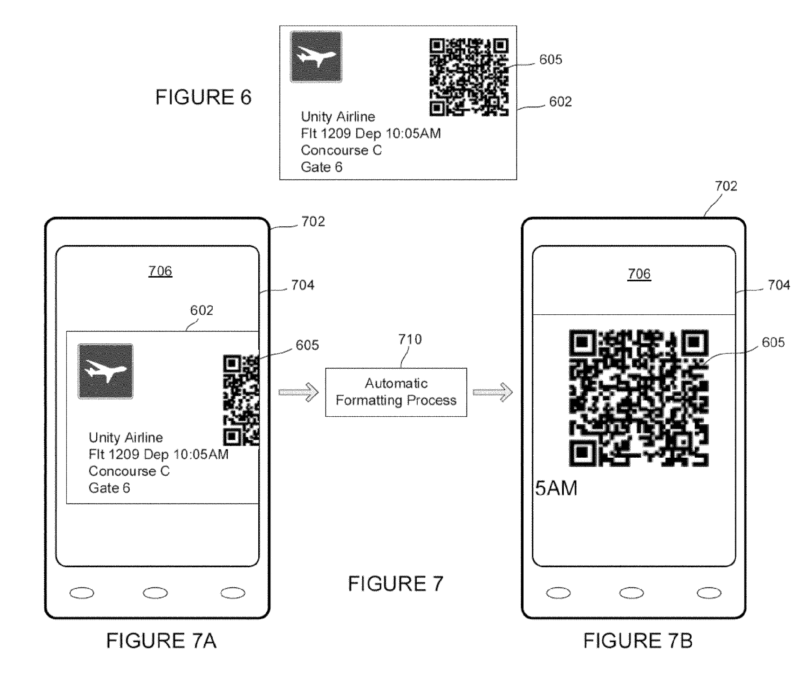

Turning now to FIGURES 6 and 7, there is shown a representative coupon 602 bearing a barcode 605 (FIGURE 6) and a mobile electronic device 702 implemented to perform automatic formatting of the barcode 605 in accordance with example embodiments of the present invention. For purposes of explanation and not of limitation, the coupon 602 is depicted as an airline boarding pass bearing a barcode 605. The boarding pass 602 includes a variety of indicia, including a graphic of an airplane, text indicating airline, gate and departure information, and the barcode 605. It is assumed in this illustrative example that the boarding pass 602 is stored in the memory of the mobile electronic device 702.

Prior to boarding the airplane, the user must present his or her boarding pass at the gate. FIGURE 7A shows how the boarding pass 602 is displayed in the absence of automatic formatting according to example embodiments of the present invention. As shown, only a portion of the barcode 605 is visible within a display region 706 of the device's display 704. In the state shown in FIGURE 7A, the partially visible barcode 605 is unreadable by an optical scanner provided at the gate. According to a conventional approach, the user must take time manipulating the coupon 602 until the barcode 605 is properly positioned and sized within the display region 706 of the display 704. It can be appreciated that aggregate delays associated with multiple passengers attempting to properly position and size their boarding pass barcodes 605 within their device's display region can result in appreciable and costly boarding delays.

Such delays and user manipulation/frustration are obviated when processing the boarding pass 602 in accordance with example embodiments of the present invention. FIGURE 7B shows the result of an automatic formatting process 710 performed on the boarding pass 602. In particular, the barcode 602 is automatically displayed in the center (or elsewhere) of the display region 706 and properly sized so that the barcode 602 can be read by the optical scanner provided at the gate.

In some example embodiments, the user typically interacts with the touch screen 704 to retrieve the boarding pass 602 from memory. A gesture is made by the user to initiate the automatic formatting process 710. In other embodiments, an external optical scanner provided at the gate transmits a command signal which is received by the user's mobile electronic device 702, causing initiation of automatic formatting of the barcode 705. In this case, the command signal may include certain parameters of the external optical scanner which are used by the mobile electronic device 702 to properly format (resize and/or position) the barcode for proper presentation on the device's display 704. It is noted that the automatic formatting process 710 may involve scaling the barcode image to improve the quality of the barcode image if needed or desired. Suitable scaling techniques can involve nearest-neighbor, bilinear or bicubic interpolation, or other type of upsampling.

In some cases, two or more optical machine readable objects, such as barcodes, are provided on a single electronic document. In some embodiments, the user selects which of the barcodes is to be formatted, such as by tapping or double-tapping on a touch screen at a location above or proximate the desired barcode. The selected barcode is automatically formatted in accordance with example embodiments of the present invention, resulting in the selected barcode being displayed at a proper location of the display and having an appropriate size for reading by an optical scanner.

In other embodiments, each of the barcodes of an electronic document is automatically identified by the mobile electronic device and presented in a scrolling manner on the display for user evaluation. Barcode scrolling is paused for a predetermined duration (e.g., 2-5 seconds), allowing the user sufficient time to assess each barcode. When the desired barcode is presented on the display, the user selects the desired barcode to be formatted, such as by tapping or double-tapping on a touch screen at a location above or proximate the desired barcode. After the desired barcode is selected, an automatic formatting process is executed, resulting in the selected barcode being displayed at a proper location of the display and having an appropriate size for reading by an optical scanner.

According to embodiments where the external optical scanner operatively communicates with the mobile electronic device, the scanner reads each of the multiplicity of barcodes provided on the electronic document, identifies which of the barcodes is associated with activity for which the scanner is programmed (e.g., boarding pass barcode vs. merchandise barcode), and reads the appropriate barcode. After the appropriate barcode is selected by the scanner, an automatic formatting process is executed, resulting in the selected barcode being displayed at a proper location of the display and having an appropriate size for reading by the scanner.

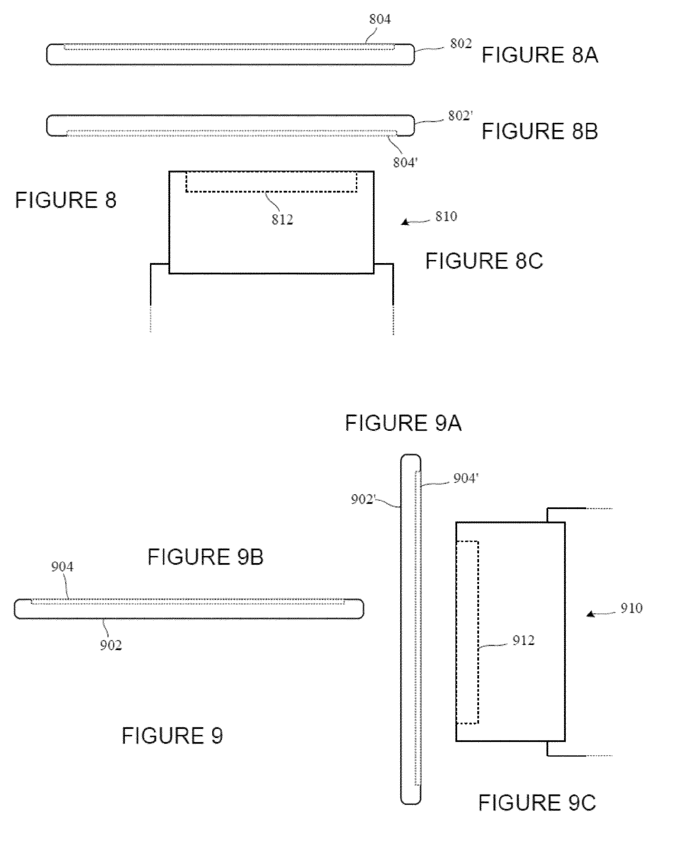

FIGURES 8 and 9 illustrate representative triggering events, each of which initiates automatic adjustment of barcode formatting to facilitate reading of the barcode by an external device, such as an optical scanner, in accordance with example embodiments of the present invention. FIGURE 8A shows a mobile electronic device 802 including a display 804 (e.g., touch screen) oriented in an upward direction as when held in a user's hand during use. FIGURE 8B shows the mobile electronic device 802' with the display 804' oriented in a downward direction so that the display 804' is directed at a reader 812 of an external optical scanner 810 shown in FIGURE 8C. By turning the mobile electronic device 802 so that the display 804 faces downward, this orientation is convenient for an up-facing optical scanner 810. In this illustrative embodiment, the change in orientation of the mobile electronic device 802 from an upward user orientation to a downward scanning orientation is detected as a triggering event. In response to the detected triggering event, a barcode of a coupon to be read by the reader 812 is automatically formatted in terms of size and position within a display region of the display 804' for presentation to the up-facing reader 812.

FIGURE 9A shows a mobile electronic device 902 including a display 904 oriented in an upward direction as when held in a user's hand during use. FIGURE 9B shows the mobile electronic device 902' with the display 904' oriented about normal to the ground so that the display 904' is directed at a reader 912 of an external optical scanner 910 shown in FIGURE 9C. By turning the mobile electronic device 902 so that the display 904 faces about normal to ground, this orientation is convenient for a side-facing optical scanner 910. In this representative embodiment, the change in orientation of the mobile electronic device 902 from an upward use orientation to a normal-to-ground scanning orientation is detected as a triggering event. In response to the detected triggering event, a barcode of a coupon to be read by the reader 912 is automatically formatted in terms of size and/or position on the display 904' for presentation to the side-facing reader 912.

Embodiments of the present invention may be implemented in software, hardware, application logic or a combination of software, hardware and application logic. The software, application logic and/or hardware may reside on a mobile electronic device, an external optical scanner configured to operative cooperatively with a mobile electronic device, or a web site that is communicatively coupled to one or both of the mobile electronic device and the external optical scanner. If desired, part of the software, application logic and/or hardware may reside on mobile electronic device, part of the software, application logic and/or hardware may reside on the external optical scanner, and part of the software, application logic and/or hardware may reside on the web site that is communicatively coupled to one or both of the mobile electronic device and the external optical scanner. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or a processor, with one example of a processor described and depicted in FIGURE 2. A computer-readable medium may comprise a computer-readable storage medium that may be any media or means that can contain or store the instructions for use by or in connection with an instruction execution system, apparatus, or device, such as a computer or a processor.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. An apparatus, comprising:
at least one processor; and
at least one memory including computer program code, the at least one memory and the computer program code configured to, with the at least one processor, cause the apparatus to perform at least the following:
store an electronic document bearing an optical machine readable object;
detect a triggering event involving the apparatus; and
automatically format the object of the electronic document for reading by an external device in response to the triggering event.

2. The apparatus of claim 1, wherein the at least one memory and the computer program code are configured to, with the at least one processor, cause the apparatus to resize and center the object for reading by the external device in response to the triggering event.

3. The apparatus of claim 1 or 2, wherein the at least one memory and the computer program code are configured to, with the at least one processor, cause the apparatus to:
display the electronic document such that none or a portion of the object is viewable; and
automatically resize and center the object for reading by the external device in response to the triggering event.

4. The apparatus of any preceding claim, wherein the at least one memory and the computer program code are configured to, with the at least one processor, cause the apparatus to detect a change in orientation of the apparatus from a use orientation to an orientation required for reading the object by the external device.

5. The apparatus of any preceding claim, wherein the at least one memory and the computer program code are configured to, with the at least one processor, cause the apparatus to detect a motion gesture involving the apparatus as the triggering event.

6. The apparatus of any preceding claim, further comprising a touch screen, wherein the at least one memory and the computer program code are configured to, with the at least one processor, cause the apparatus to detect a motion gesture involving the touch screen as the triggering event.

7. The apparatus of any preceding claim, further comprising a touch screen, wherein the at least one memory and the computer program code are configured to, with the at least one processor, cause the apparatus to detect a motion gesture involving a portion of the apparatus other than the touch screen as the triggering event.

8. The apparatus of any preceding claim, wherein the at least one memory and the computer program code are configured to, with the at least one processor, cause the apparatus to detect a signal generated by the external device as the triggering event.

9. The apparatus of any preceding claim, wherein the at least one memory and the computer program code are configured to, with the at least one processor, cause the apparatus to identify the object relative to other portions of the electronic document.

10. The apparatus of any preceding claim, wherein the optical machine readable object comprises a barcode.

11. The apparatus of any preceding claim, wherein the electronic document is stored in the memory as a document intended to be printed on paper or other printable material.

12. A method, comprising:
selecting an electronic document bearing an optical machine readable object stored on an apparatus;
detecting a triggering event involving the apparatus; and
automatically formatting the object for reading by an external device in response to the triggering event.

13. The method of claim 12, wherein detecting the triggering event comprises detecting a change in orientation of the device from a use orientation to an orientation required for reading the object by the external device.

14. A computer program product comprising a computer-readable storage medium including computer-executable instructions for executing a computer process comprising:
selecting an electronic document bearing an optical machine readable object stored on an apparatus;
detecting a triggering event involving the apparatus; and
automatically formatting the object for reading by an external device in response to the triggering event.
